# EUROPEAN PATENT SPECIFICATION

(11) **EP 1 247 737 B1**
(45) Date of publication and mention of the grant of the patent: **09.06.2004**
(21) Application number: 02250423.7
(22) Date of filing: 22.01.2002
(51) Int. Cl.: B64C 29/00, B64D 27/24, B64C 39/00

(54) **Lift generating means for aircraft**
Auftrieberzeugende Mittel für Luftfahrzeuge
Moyens sustentateurs pour engins aériens

(30) Priority: 25.01.2001 GB 0101906; 22.06.2001 GB 0115342; 27.09.2001 GB 0123212
(43) Date of publication of application: 09.10.2002
(73) Proprietor: Sanders, Albert Owen, Higham Ferrers Rushden, Northamptonshire NN10 8BG (GB)
(72) Inventor: Sanders, Albert Owen, Higham Ferrers Rushden, Northamptonshire NN10 8BG (GB)
(74) Representative: Gregory, Timothy Mark

(56) References cited:
- DE-A- 2 947 309
- GB-A- 2 312 709
- US-A- 4 116 727
- US-A- 4 312 483
- US-A- 4 807 830

## Description

The present invention relates to an apparatus for generating lift for aircraft. More particularly, but not exclusively, it relates to a means of aircraft propulsion combining the ability to take off and land in relatively restricted spaces with the generation of lift for sustained flight, and to an aircraft provided with such means. The term aircraft is used herein to denote any airborne vehicle.

Conventional aircraft designs, particularly those used for commercial passenger and cargo traffic, are becoming ever larger. Due to the generally tubular form of a conventional fuselage, and the elongate plan form of conventional wings, a useful increase in capacity of a conventional aircraft design can lead to a significant increase in overall dimensions. In any case, many aircraft are already too large for all but the largest airports.

The power required for take-off, and the length of runway required, increase greatly with increasing aircraft size. The space available for airport runways conveniently close to centres of population is in short supply, and a conventional "brute force" take-off is wasteful of fuel. The noise and pollution associated therewith also cause concern for those living near airports.

It is also the case that the most efficient aircraft configuration for high-speed cruising is not the most efficient for take-off and landing. As a result, existing aircraft designs are normally a compromise between, for example, a narrow-chord, broad wingspan, straight wing profile, preferable for take-off, landing and low-speed flight, and a deep-chord, smaller wingspan, swept-back wing profile for higher speed flight. Military combat aircraft have been built with "swing-wings", so that they can adopt an optimum profile for each stage of flight. Swing-wings have not been proven particularly suitable for larger aircraft, and have found no civilian use.

Lighter-than-air craft, such as dirigibles, can take off and land in convenient spaces, but their size limits the speed at which they can be driven through the resistance of the air, and they cannot achieve the speeds required for modem air transport. Helicopters can take off and land vertically, but only at the price of very high fuel consumption, and they are also limited in horizontal speed due to rotor tip speed limitations. Vertical take-off and landing using vertically-orientable jets, such as on the Harrier jet, is so wasteful of fuel, noisy and disruptive that it is only suitable for military use.

An attempt to address this problem has been disclosed in UK Patent Application No. 2312709A. This describes a generally disc-shaped aircraft or spacecraft. Its main means of generating lift is either a jet of ignited fuel or a fan creating an airflow, in each case directed downwardly along an axis perpendicular to and through the centre of the disc. (Such systems have, for example, previously been disclosed in European Patent Application No. 0696984A and UK Patent Application No. 2288779A). As a further means of generating lift, this aircraft is provided with one or more superconducting rings or coils, which are so arranged that when a current is passed through them, they produce a magnetic field directed along the same axis. This magnetic field can interact with the Earth's magnetic field, generating a repulsive force that lifts the aircraft and can even drive it into space.

This arrangement depends on maintaining the rings or coils in a superconducting state. Even with current materials, this involves the use of extremely low temperatures. Also, the main lift is still generated by a jet or a ducted fan, each requiring fuel. The magnetic repulsion appears to be only auxiliary, except, according to the teaching of the above application, adjacent the North Pole, where the Earth's magnetic field has a particular alignment. At this point, the magnetic repulsion appears to be sufficient to propel the craft into space.

It would hence be advantageous if the concept of lift from magnetic repulsion could be applied without requiring superconductors, and as a main means of generating lift independent of geographical location.

There is thus a need for a form of aircraft which can travel rapidly and efficiently once in the air, and can take off and land in a relatively small space, ideally substantially vertically, and without wasteful use of fuel.

It is therefore an object of the present invention to provide a means for generating lift which allows an aircraft provided therewith conveniently to take off from and land in significantly smaller spaces than are required for existing aircraft, while involving less pollution, a lower expenditure of fuel and lower noise levels, and permitting rapid translational movement of the aircraft. It is also an object of the present invention to provide an aerial transport vessel equipped with such lift generating means and of significantly more compact design than hitherto feasible.

According to a first aspect of the present invention, there is provided an aircraft with lift generating means comprising at least one substantially disc-shaped body adapted to generate a magnetic field and thereby to produce lift by repulsion between said magnetic field generated by said body and the magnetic field of the Earth, wherein the or each said body comprises soft iron and is rotatable about a generally vertical, in use, central axis and the lift generating means is provided with induction motor means adapted to drive the or each said body rotationally.

Preferably, the induction motor means surrounds the or each said rotatable body circumferentially, and is adapted to act on a periphery of the or each said rotatable body.

In a preferred embodiment, three coaxial rotatable discs are provided.

Each said rotatable disc may advantageously be thicker adjacent its central axis than adjacent its circumference.

The or each rotatable disc may be provided with means to maintain a peripheral zone thereof at a temperature below ambient temperature, and may also be provided with means to maintain an axial zone thereof at a temperature above ambient temperature.

The or each rotatable disc may comprise soft iron and silicon to maximise its magnetic susceptibility.

The rotatable disc or discs may thus generate lift by magnetic repulsion, for example acting in opposition to the Earth's magnetic field.

An outer casing may be provided to enclose said at least one rotatable body and said induction motor, having a generally cylindrically symmetrical form, the cylindrical axis of symmetry thereof coinciding substantially with the rotational axis of said at least one rotatable body.

Said outer casing may advantageously have an oblately ellipsoidal form, the shortest axis thereof coinciding substantially with the rotational axis of said at least one rotatable body.

The outer casing may itself be rotatable about a generally vertical in use axis.

An auxiliary electromagnet may be provided which, when energised, acts to oppose the magnetic field generated by the lift generating means.

The auxiliary electromagnet may be provided with switching means adapted to allow it to be switched on simultaneously with the lift generating means to negate the lift generated thereby, and to allow the auxiliary magnet to be switched off independently of the lift generating means, when required, to permit take-off.

The auxiliary electromagnet may be mounted detachably to the lift generating means, so that it may be left on the ground on take-off.

Alternatively, an auxiliary electromagnet may be provided as part of a ground station, launch pad or the like.

Optionally, the auxiliary electromagnet may also be adapted so to reinforce the Earth's local magnetic field as to augment the lift generated by the lift generating means by magnetic repulsion thereagainst, and thereby assist take-off, or cushion landing.

According to a second aspect of the present invention, there is provided an aircraft comprising a fuselage adapted to carry a payload, and a means for generating lift as described above in the first aspect of the invention, mounted to an upper, in use, part of the fuselage.

Advantageously, the aerial transport vessel is provided with propulsive means to propel it in a generally horizontal, in use, direction, preferably comprising at least one jet engine, optionally at least one turbojet engine.

The propulsive means may be mounted to the fuselage of the vessel.

The propulsive means may be provided with steering means, adapted to direct or to divert the thrust of the propulsive means, preferably comprising controllably steerable jet exhaust nozzles, or gas flow deflector means, such as vanes or flaps, disposable to divert the flow of jet exhaust gases or the like.

The aircraft may be provided with means so to adjust its attitude in relation to its direction of travel as to generate lift from airflow over an ellipsoidal and/or rotating outer casing of the lift generating means.

In a further embodiment, the rotatable discs of the lift generating means may be dispensed with, and alternative lift means substituted.

An embodiment of the present invention will now be more particularly described, by way of example and with reference to the accompanying drawings, in which:
**Figure 1** is a plan view of a vessel provided with lift generating means embodying the invention;
**Figure 2** is a frontal elevation of the vessel of Figure 1; and
**Figure 3** is a schematic partial sectional frontal elevation of the vessel of Figure 1, to show the arrangement of the lift generating means.

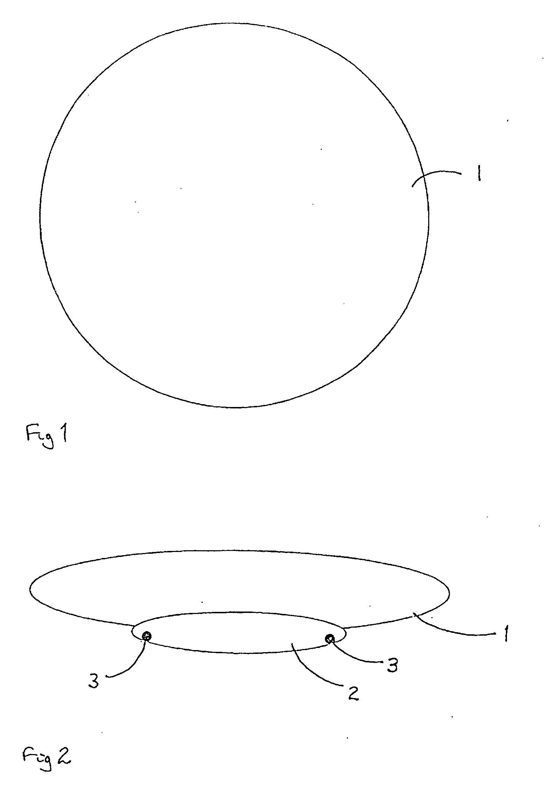

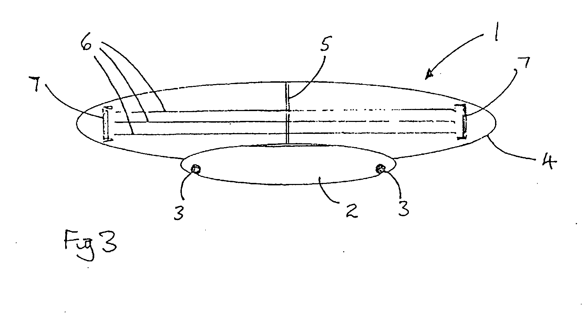

Referring now to the drawings, and to Figures 1 and 2 in particular, an aerial transport vessel has a lifting body 1 of ellipsoidal form, circular when viewed from above, but a shallow ellipse in elevation. A fuselage 2 is mounted below the lifting body 1, and is also conveniently of a generally ellipsoidal form, although embodiments with alternative fuselage shapes are envisaged. Two turbojet air intakes 3 are provided in a frontal aspect of the fuselage 2, and corresponding jet exhausts are provided in a rearward aspect thereof (not shown). While two intakes 3 and two exhausts are shown, other numbers and configurations are possible. The configuration shown, with two jets widely spaced, is believed to encourage stability. The turbojet or jets connected to the intakes 3 are disposed generally horizontally to provide optimum horizontal thrust. The fuselage 2 also contains a cockpit, control gear, passenger accommodation, cargo holds, sensor platforms and/or munitions bays, according to the use to which the vessel is to be put.

Referring now to Figure 3, the lifting body 1 has a outer hull 4, which contains a central axle 5, to which are rotatably mounted three discs 6 of soft iron and silicon. Each disc 6 is thicker adjacent the axle 5 than at its rim (not shown for clarity). The windings 7 of an induction motor encircle the rims of all three discs 6; the induction motor windings 7 thus have the form of an annulus disposed within the outer hull 4. Heating means (not shown in schematic view for clarity) are provided to heat the zone of each disc 6 adjacent the axle 5 above ambient temperature, and cooling means are provided to cool the portion of each disc 6 adjacent the induction motor windings 7 below ambient temperature.

Rechargeable electric batteries (not shown) are provided, optionally for powering the heating and cooling means, and especially for powering the induction motors. Recharging may be carried out when the aircraft is grounded and/or dynamo means (not shown) may be used during flight.

The induction motor windings 7 are connected to the source of electrical power, and act on the periphery of the soft iron discs 6, causing them to spin rapidly about the axle 5. Under these conditions, the spinning soft iron/silicon discs 6 generate a magnetic field which interacts with the Earth's magnetic field (optionally augmented by a ground-mounted electromagnet, for example for take-off or landing) to generate lift by magnetic repulsion.

The faster the rotation of the discs 6, the greater should be the repulsive magnetic field generated. Similarly, the more massive the soft iron component of the discs 6, the greater the magnetic field, and a greater mass also leads to greater angular momentum for a given rotational speed. This makes it easier to maintain rotation of the discs 6, once started, and has the added benefit of providing gyroscopic stability for the vessel. It is also believed that a substantial temperature differential across each disc 6 increases the intensity of the magnetic field generated.

The outer hull 4 of the lifting body 1 is also rotated, at an angular velocity that is normally significantly lower than that of the discs 6. It is believed that the interaction of the rotating outer hull 4 with the air flow passing over it in horizontal flight reduces the effective air resistance and allows the vessel to travel more rapidly and/or to use less fuel at a given speed.

An auxiliary electromagnet may be provided to aid the process of take-off. The field from this electromagnet is arranged to oppose the magnetic field of the spinning soft iron discs 6, and thereby to negate the lift therefrom. The rotatable discs 6 may thus be brought up to operating speed while the vessel remains on the ground. When the field of the auxiliary electromagnet is switched off, the vessel may then take off under full lifting power, the lift-generating apparatus being in full operation. The auxiliary electromagnet may be mounted to the vessel, but weight considerations imply that it is preferably detachable therefrom, so that it may be left behind on the ground on take-off. In some embodiments, the auxiliary electromagnet comprises part of a launch pad for the vessel.

It is also envisaged that an electromagnet could be used to supplement the local strength of the Earth's magnetic field, to assist take-off, and to render landing more controllable.

As will be apparent from the above description, a vessel embodying aspects of the present invention will be capable of controlled take-off and landing on sites little larger than the vessel's own diameter. As the wide wing spans and elongate fuselages of conventional commercial aircraft have been dispensed with, such vessels are in any case far more compact than current aircraft for a given passenger capacity or cargo payload. In a military context, the preferred outer shape of the vessel may provide enhanced "stealth" capabilities.

The vessels described do not require jet engines for take-off and landing, and so the jet engines employed for horizontal flight may be optimised for that purpose alone. This should lead to designs with greater fuel efficiency, and with greater reliability, since the extreme stresses and maximum power settings of take off and landing are no longer involved.

The stresses on the undercarriage of such a vessel are far lower than for an aircraft expected to carry out a high-speed take off and/or landing run. The braking system will also undergo far less stress and wear.

A vessel designed to embody the principles of the present invention will thus tend to be smaller, cheaper, safer, more efficient and easier to operate than an aircraft designed according to conventional models.

## Claims

1. An aircraft provided with lift generating means (1) comprising at least one substantially disc-shaped body (6) adapted to generate a magnetic field and thereby to produce lift by repulsion between said magnetic field generated by said body (6) and the magnetic field of the Earth, **characterised in that** the or each said body (6) comprises soft iron and is rotatable about a generally vertical central axis (5) and the lift generating means (1) is provided with induction motor means (7) adapted to drive the or each said body (6) rotationally.

2. An aircraft as claimed in claim 1, **characterised in that** the induction motor means (7) surrounds the or each said rotatable body (6) circumferentially, and is adapted to act on a periphery of the or each said rotatable body (6).

3. An aircraft as claimed in either claim 1 or claim 2, **characterised in that** three coaxial rotatable discs (6) are provided.

4. An aircraft as claimed in any one of the preceding claims, **characterised in that** the thickness of the or each rotatable disc (6) is greater adjacent its central axis (5) than adjacent its circumference.

5. An aircraft as claimed in any one of the preceding claims, **characterised in that** the or each rotatable disc (6) is provided with means to maintain a peripheral zone thereof at a temperature below ambient temperature.

6. An aircraft as claimed in any one of the preceding claims, **characterised in that** the or each rotatable disc (6) is provided with means to maintain an axial zone thereof at a temperature above ambient temperature.

7. An aircraft as claimed in any one of the preceding claims, **characterised in that** it comprises an outer casing (4) to enclose said at least one rotatable body (6) and said induction motor (7), having a generally cylindrically symmetrical form, the axis of cylindrical symmetry thereof coinciding substantially with the rotational axis (5) of said at least one rotatable body (6).

8. An aircraft as claimed in claim 7, **characterised in that** the outer casing (4) has an oblately spheroidal form, the shortest axis thereof coinciding substantially with the rotational axis (5) of said at least one rotatable body (6).

9. An aircraft as claimed in any one of the preceding claims, **characterised in that** there is provided an auxiliary electromagnet, which, when energised, acts to oppose the magnetic field generated by the lift generating means (1).

10. An aircraft as claimed in claim 9, **characterised in that** the auxiliary electromagnet is provided with switching means adapted to allow it to be switched on simultaneously with the lift generating means (1) to negate the lift generated thereby, and to allow the auxiliary magnet to be switched off independently of the lift generating means (1), when required, to permit take off.

11. An aircraft as claimed in any one of the preceding claims, **characterised in that** it further comprises a fuselage (2) adapted to carry a payload, the lift generating means (1) being mounted to an upper, part of the fuselage (2).

12. An aircraft as claimed in any one of the preceding claims, **characterised in that** it is further provided with propulsive means (3) to propel it in a generally horizontal, direction, preferably comprising at least one jet engine (3).

13. An aircraft as claimed in claim 12, **characterised in that** the propulsive means (3) is provided with steering means, adapted to direct or to divert the thrust of the propulsive means (3), preferably comprising controllably steerable exhaust nozzles, or gas flow deflector means, such as vanes or flaps, disposable to divert the flow of exhaust gases or the like.

14. An aircraft as claimed in either claim 12 or claim 13, further comprising means so to adjust its attitude in relation to its direction of travel as to generate lift from airflow over an ellipsoidal and/or rotating outer casing (4).

## Patentansprüche

1. Ein mit auftrieberzeugenden Mitteln (1) versehenes Luftfahrzeug, die wenigstens einen, im Wesentlichen scheibenförmigen, Körper (6) umfassen, der adaptiert ist ein Magnetfeld zu generieren und dadurch Auftrieb durch Abstoßung zwischen dem vom besagten Körper (6) generierten Magnetfeld und dem Magnetfeld der Erde zu produzieren, **dadurch gekennzeichnet, dass** der oder jeder besagte Körper (6) Weicheisen enthält und um eine im Allgemeinen vertikale Mittelachse (5) drehbar ist, und das auftrieberzeugende Mittel (1) mit Induktionsmotormitteln (7) versehen ist, um den oder jeden besagten Körper (6) rotierend anzutreiben.

2. Ein Luftfahrzeug wie in Anspruch 1 beansprucht, **dadurch gekennzeichnet, dass** das Induktionsmotormittel (7) den oder jeden besagten drehbar beweglichen Körper (6) umfangmäßig umgibt, und adaptiert ist auf eine Peripherie des oder jedes besagten drehbar beweglichen Körpers (6) einzuwirken.

3. Ein Luftfahrzeug wie in entweder Anspruch 1 oder Anspruch 2 beansprucht, **dadurch gekennzeichnet, dass** drei koaxiale drehbar bewegliche Scheiben (6) bereitgestellt sind.

4. Ein Luftfahrzeug wie in einem beliebigen der vorhergehenden Ansprüche beansprucht, **dadurch gekennzeichnet, dass** die Dicke der oder jeder drehbar beweglichen Scheibe (6) angrenzend an ihre Mittelachse (5) größer als angrenzend an ihren Umfang ist.

5. Ein Luftfahrzeug wie in einem beliebigen der vorhergehenden Ansprüche beansprucht, **dadurch gekennzeichnet, dass** die oder jede drehbar bewegliche Scheibe (6) mit Mitteln versehen ist, um eine periphere Zone davon auf einer Temperatur unter der Umgebungstemperatur zu halten.

6. Ein Luftfahrzeug wie in einem beliebigen der vorhergehenden Ansprüche beansprucht, **dadurch gekennzeichnet, dass** die oder jede drehbar bewegliche Scheibe (6) mit Mitteln versehen ist, um eine axiale Zone davon auf einer Temperatur über der Umgebungstemperatur zu halten.

7. Ein Luftfahrzeug wie in einem beliebigen der vorhergehenden Ansprüche beansprucht, **dadurch gekennzeichnet, dass** es ein äußeres Gehäuse (4) umfasst, um besagten wenigstens einen drehbar beweglichen Körper (6) und besagten Induktionsmotor (7) zu umgeben, eine allgemein zylindrische symmetrische Form aufweist, die Achse der zylindrischen Symmetrie davon im Wesentlichen mit der Rotationsachse (5) des besagten wenigstens einen drehbar beweglichen Körpers (6) kongruiert.

8. Ein Luftfahrzeug wie in Anspruch 7 beansprucht, **dadurch gekennzeichnet, dass** das äußere Gehäuse (4) eine abgeflachte, sphäroidische Form hat, deren kürzeste Achse im Wesentlichen mit der Rotationsachse (5) des besagten wenigstens einen drehbar beweglichen Körpers (6) kongruiert.

9. Ein Luftfahrzeug wie in einem beliebigen der vorhergehenden Ansprüche beansprucht, **dadurch gekennzeichnet, dass** ein Hilfselektromagnet bereitgestellt ist, der, wenn erregt, dem vom auftrieberzeugenden Mittel (1) generierten Magnetfeld entgegenwirkt.

10. Ein Luftfahrzeug wie in Anspruch 9 beansprucht, **dadurch gekennzeichnet, dass** der Hilfselektromagnet mit Schaltmitteln versehen ist, die adaptiert sind gleichzeitig mit dem auftrieberzeugenden Mittel (1) eingeschaltet werden zu können, um den dadurch generierten Auftrieb zu negieren, und um zu gestatten den Hilfsmagnet, wenn erforderlich, unabhängig vom auftrieberzeugenden Mittel (1) abzuschalten, um Start zuzulassen.

11. Ein Luftfahrzeug wie in einem beliebigen der vorhergehenden Ansprüche beansprucht, **dadurch gekennzeichnet, dass** es weiter ein Rumpfwerk (2) umfasst, das adaptiert ist eine Nutzlast zu tragen, wobei das auftrieberzeugende Mittel (1) an einen oberen Teil des Rumpfwerks (2) montiert wird.

12. Ein Luftfahrzeug wie in einem beliebigen der vorherigen Ansprüche beansprucht, **dadurch gekennzeichnet, dass** es weiter mit Antriebsmitteln (3) versehen ist, um es in einer im Allgemeinen horizontalen Richtung vorwärtszutreiben, und vorzugsweise wenigstens ein Strahltriebwerk (3) umfasst.

13. Ein Luftfahrzeug wie in Anspruch 12 beansprucht, **dadurch gekennzeichnet, dass** das Antriebsmittel (3) mit Steuerungsmitteln versehen ist, die adaptiert sind den Schub des Antriebsmittels (3) zu lenken bzw. umzulenken, vorzugsweise steuerbar lenkbare Abgasdüsen oder Gasstromablenkmittel, wie beispielsweise Schaufeln oder Klappen, umfassend, die angeordnet sind die Strömung von Abgasen oder dergleichen umzulenken.

14. Ein Luftfahrzeug wie entweder in Anspruch 12 oder Anspruch 13 beansprucht, das weiter Mittel umfasst, um seine Fluglage in Bezug auf seine Bewegungsrichtung so einzustellen, dass Auftrieb seitens Luftströmung über ein ellipsoidisches und/oder rotierendes äußeres Gehäuse (4) generiert wird.

## Revendications

1. Engin aérien doté de moyens sustentateurs (1) comportant au moins un corps essentiellement en forme de disque (6) adapté de manière à produire un champ magnétique et, de ce fait, produire une sustentation par répulsion entre ce champ magnétique produit par le corps (6) et le champ magnétique de la terre, **caractérisé en ce que** le corps ou chaque corps (6) comprend du fer doux et peut être mis en rotation autour d'un axe central généralement vertical (5), et **en ce que** les moyens sustentateurs (1) sont dotés d'un moteur à induction (7) adapté de manière à mettre en rotation le corps ou chaque corps (6).

2. Engin aérien selon la revendication 1, **caractérisé en ce que** le moteur à induction (7) entoure le corps ou chaque corps (6) pouvant être mis en rotation de manière circonférentielle, et est adapté pour agir sur une périphérie du corps ou de chaque corps (6) pouvant être mis en rotation.

3. Engin aérien selon la revendication 1 ou la revendication 2, **caractérisé en ce qu'**il est prévu trois disques coaxiaux (6) qui peuvent être mis en rotation.

4. Engin aérien selon l'une quelconque des revendications précédentes, **caractérisé en ce que** l'épaisseur du disque ou de chaque disque (6) pouvant être mis en rotation est plus grande près de son axe central (5) que près de sa circonférence.

5. Engin aérien selon l'une quelconque des revendications précédentes, **caractérisé en ce que** le disque ou chaque disque (6) pouvant être mis en rotation est doté de moyens servant à en maintenir une zone périphérique à une température au-dessous de la température ambiante.

6. Engin aérien selon l'une quelconque des revendications précédentes, **caractérisé en ce que** le disque ou chaque disque (6) pouvant être mis en rotation est doté de moyens servant à en maintenir une zone axiale à une température au-dessus de la température ambiante.

7. Engin aérien selon l'une quelconque des revendications précédentes, **caractérisé en ce qu'**il comporte une enveloppe extérieure (4) qui renferme au moins un corps (6) pouvant être mis en rotation ainsi que le moteur à induction (7), et qui est de forme symétrique généralement cylindrique, dont l'axe de symétrie cylindrique coïncide essentiellement avec l'axe de rotation (5) d'au moins l'un des corps (6) pouvant être mis en rotation.

8. Engin aérien selon la revendication 7, **caractérisé en ce que** l'enveloppe extérieure (4) est en forme de sphéroïde aplati aux pôles, dont l'axe le plus court coïncide.essentiellement avec l'axe de rotation (5) d'au moins l'un des corps (6) pouvant être mis en rotation.

9. Engin aérien selon l'une quelconque des revendications précédentes, **caractérisé en ce qu'**il est prévu un électro-aimant auxiliaire qui, lorsqu'il est alimenté, agit de manière à opposer le champ magnétique produit par les moyens sustentateurs (1).

10. Engin aérien selon la revendication 9, **caractérisé en ce que** l'électro-aimant auxiliaire est doté de moyens de commutation adaptés pour qu'il soit branché en même temps que les moyens sustentateurs (1) afin d'annuler la sustentation produite par ces moyens sustentateurs, et permettre de débrancher l'électro-aimant auxiliaire indépendamment des moyens sustentateurs (1) au moment voulu, pour que le décollage puisse s'effectuer.

11. Engin aérien selon l'une quelconque des revendications précédentes, **caractérisé en ce qu'**il comprend par ailleurs un fuselage (2) adapté pour transporter une charge utile, les moyens sustentateurs (1) étant montés sur une partie supérieure du fuselage (2).

12. Engin aérien selon l'une quelconque des revendications précédentes, **caractérisé en ce qu'**il est doté par ailleurs de moyens de propulsion (3) qui le propulsent généralement à l'horizontale, ces moyens comportant de préférence au moins un moteur à réaction (3).

13. Engin aérien selon la revendication 12, **caractérisé en ce que** les moyens de propulsion (3) sont dotés de moyens de direction, adaptés de manière à orienter ou dévier la poussée des moyens de propulsion (3), comportant de préférence des tuyères d'éjection orientables de manière contrôlable, ou des déflecteurs du flux de gaz, comme par exemple des pales ou des volets, qui peuvent être disposés de manière à dévier le flux des gaz d'éjection ou autres gaz similaires.

14. Engin aérien selon la revendication 12 ou la revendication 13, comportant par ailleurs des moyens d'en ajuster l'attitude par rapport au sens de déplacement, de manière à produire une sustentation engendrée à partir de l'écoulement d'air au-dessus d'une enveloppe extérieure ellipsoïdale et/ou en rotation (4).
